# EUROPEAN PATENT APPLICATION

(11) **EP 3 170 723 A1**
(43) Date of publication of application: **24.05.2017**
(21) Application number: 16198910.8
(22) Date of filing: 15.11.2016
(51) Int. Cl.: B62H 5/14, B62H 5/20

(54) **LOCK FOR A BICYCLE**

(30) Priority: 20.11.2015 NL 2015831
(71) Applicant: Bekker, Michiel, 7005 BD Doetinchem (NL)
(72) Inventor: Bekker, Michiel, 7005 BD Doetinchem (NL)
(74) Representative: 't Jong, Bastiaan Jacob

(57) **Abstract**

The invention relates a lock, particularly a cycle lock, wherein the lock comprises:
- a closure (18) displaceable between an open position and a closed position;
- spring means for urging the closure to the open position;
- a locking (2) for locking the closure in the closed position;
- an electric actuator (19) for operating the locking;
- a first control (3) for controlling the electric actuator, wherein the first control comprises first communication means(4); and
- a portable key (6) comprising second communication means (8) for communicating with the first communication means (4),
wherein the first control comprises a motion sensor (5) for detecting movement and then activating the first communication means(4).

## Description

The invention relates to a lock, particularly a cycle lock, wherein the lock comprises:
- a closure displaceable between an open position and a closed position;
- spring means for urging the closure to the open position;
- a locking for locking the closure in the closed position;
- an electric actuator for operating the locking;
- a first control for controlling the electric actuator, wherein the first control comprises first communication means; and
- a portable key comprising a second control with second communication means for communicating with the first communication means.

Such a lock is known from DE 102008020950. This publication relates to a cycle lock with a U-shaped housing, in which a partially circular rod is displaceable as closure and can bridge the opening in the U-shaped housing. The closure is urged to the open position with a spring.

In this prior art lock, the lock must be closed by pressing the closure to the closed position. The closure is mechanically locked in this position.

An actuator which can operate the locking is provided for opening the lock. The actuator is activated with a remote control, a pin code or a fingerprint.

When a remote control is used, the lock must continuously scan whether a signal is being generated by the remote control, after which the lock can be unlocked. This increases the power consumption of the lock, whereby a battery for power supply will run down relatively quickly.

DE 102013013087 describes a cycle lock which is integrated in the frame and engages on the crankshaft of the cycle. The cycle lock is provided with electronics which can register the presence of a correct RFID tag. As soon as this tag is registered, the lock will be unlocked. Opening and closing of the lock take place in electrically controlled manner.

Such a solution requires a considerable amount of power, since the lock has to be electrically controlled as a whole. Furthermore, the lock is here also required to continuously scan whether the correct RFID tag is present and the lock can then be operated.

It is now an object of the invention to reduce or even obviate the above stated drawbacks.

This object is achieved according to the invention with a lock according to the preamble, which is characterized in that the first control comprises a motion sensor for detecting movement and then activating the first communication means.

The lock usually has to be opened only when the user is close to the lock, which is for instance arranged on a cycle. This lock can for instance be a ring lock, U-lock or chain lock. As soon as the user takes hold of the cycle, the lock will move and this will be registered by the motion sensor. The first communication means can then be activated in order to detect whether the correct portable key is present, after which the lock can be unlocked, whereby the closure will move automatically to the open position as a result of the spring means.

Because the first communication means are only activated upon detection of a movement, the power consumption of the lock will be drastically reduced. By using as motion sensor for instance a switch with a moving mass for operation of the switch, the lock can be completely currentless. Only when the mass of the switch is displaced as a result of movement can an electrical circuit be closed, whereby the lock is activated.

A preferred embodiment of the lock according to the invention comprises a sensor for detecting the position of the closure.

The sensor for detecting the position of the closure can for instance be a simple switch. It is hereby for instance possible to make the lock completely currentless in opened position. It is namely only when the lock is closed that it is necessary for the first control to verify whether the portable key is in the vicinity and the lock has to be opened again.

In a further embodiment of the lock according to the invention the second communication means comprise a passive transmitter and the first control comprises a receiver and an electromagnetic source for activating the passive transmitter.

Because a passive transmitter is used in the portable key, this key will not require power. When the first control is activated by the movement, the electromagnetic source can also be activated, whereby the second communication means are supplied with power and communication between the first and second communication means can then be brought about in order to determine whether the lock has to be opened.

In an embodiment of the lock according to the invention the first and second communication means bring about two-way communication.

The two-way communication not only allows the portable key to transmit a code to the first control in order to open the lock, it also allows the first control to transmit for instance a status of the lock to the portable key.

In the lock according to the invention the portable key is therefore preferably provided with an electronic memory for registering data relating to the two-way communication.

Every action of the opening of the lock can for instance be stored in this memory, but is also possible to store that the lock was closed manually. Such information can be important if the cycle is stolen despite the lock. The information can then be used to prove that the cycle was indeed locked.

A further preferred embodiment of the lock further comprises measuring means for measuring the distance between the first control and the second control of the portable key, and alarm means wherein the first and/or the second control activates the alarm means when the distance measured by the measuring means exceeds a threshold value while the closure is in the open position.

In the case that the measuring means are arranged in the portable key, the first control transmits the state of the closure via the first and second communication means to the key.

When the lock is in the open position and the distance between the first control and the second control then becomes too great, this means that the user is leaving the cycle without locking the cycle. The alarm means can then alert the user thereto by means of for instance a sound signal, a vibration signal and/or a light signal.

The alarm means can be arranged in the portable key and/or in the part which is mounted on the bike. In the case that the measuring means are arranged in the portable key, the first control will transmit the state of the lock to the second control, so that an alarm signal will only be generated when the lock is in an open position and the distance is exceeded.

The measuring means preferably determine the exceeding of the threshold value on the basis of the signal strength between the first and second communication means.

It is also possible to activate the alarm means when the lock is still in opened position after a determined period of time, during which no more movement is detected by the motion sensor.

Second alarm means which are connected to the first control can further be provided so that when the distance measured by the measuring means exceeds the threshold value, alerting can take place not only on the portable key but alerting can also take place in the cycle. In the cycle, alerting preferably takes place by means of a sound signal and/or a light signal.

The signal strength will usually be taken into consideration during wireless communication between the first and second control. Such protocols are known and ensure that the data exchange can take place more quickly with a good signal than with a bad signal. An indication of the distance between the two controls can therefore be obtained by monitoring the signal strength.

It is only when the first control has transmitted to the second control that the lock is closed that the alarm means in the portable key will be deactivated. This prevents an incorrect status being registered in the key when the lock is nevertheless closed out of reach of the portable key.

In yet another embodiment of the lock according to the invention the first control comprises third communication means for communicating on the basis of a light signal and/or sound signal.

In the case that the lock has been closed and the portable key is lost, there would be no possibility of opening the lock without damage. By providing third communication means the lock can still be opened by means of another device, such as for instance a smart phone. The other device transmits for this purpose a light signal and/or a sound signal in which a code is included. The first control can receive this code incorporated in the light signal and/or sound signal via the third communication means and still open the lock on the basis thereof.

These and other features of the invention are further elucidated with reference to the accompanying drawings.
Figure 1 shows a schematic view of an embodiment of the lock according to the invention.
Figures 2A and 2B show a detail of the lock according to figure 1 in two positions.

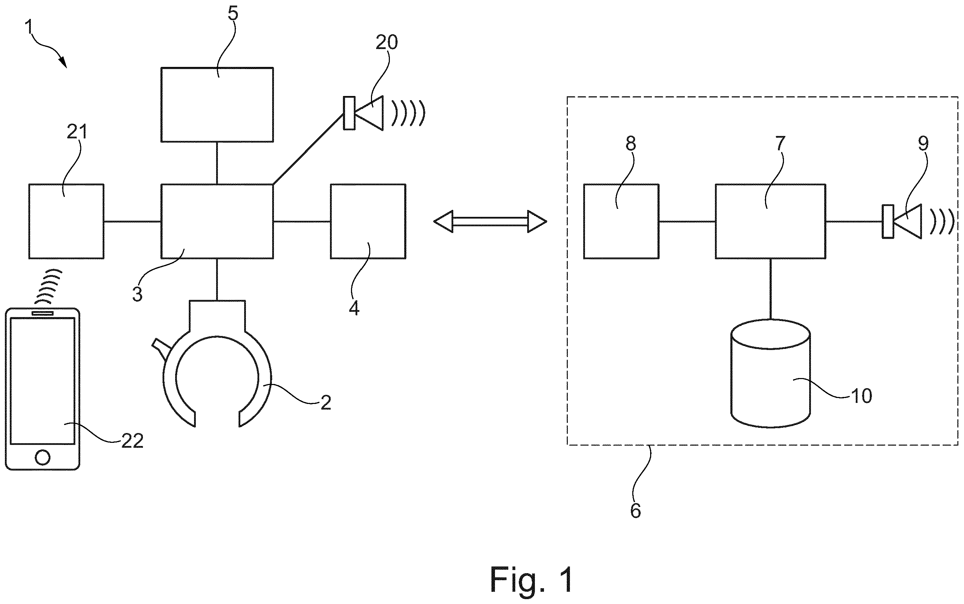

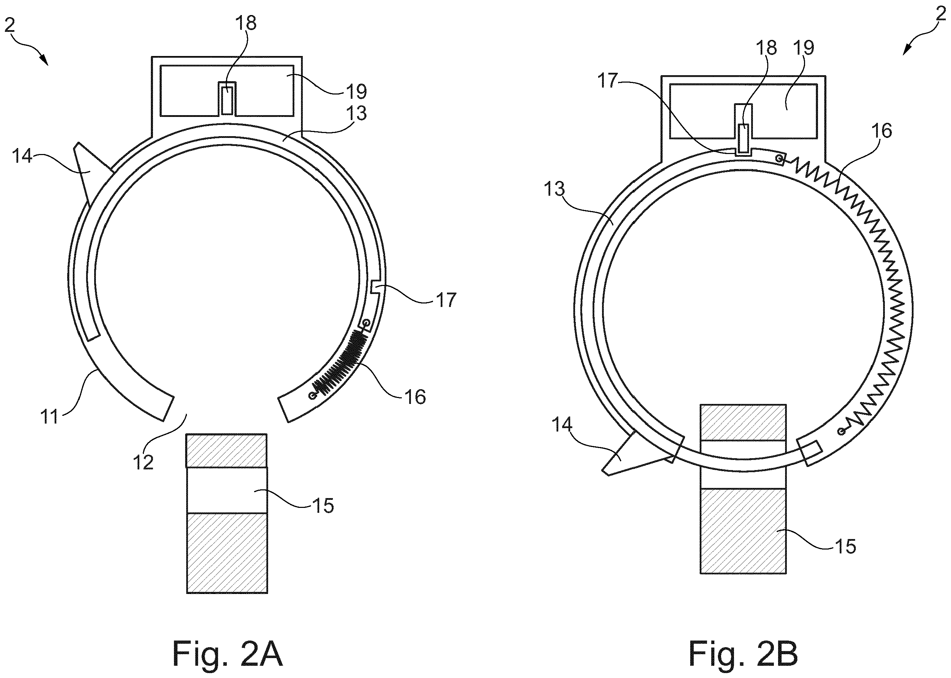

Figure 1 shows schematically the lock 1 according to the invention. Lock 1 comprises a ring lock 2 which will be further elucidated with reference to figures 2A and 2B. Ring lock 2 is connected to a first control 3 comprising first communication means 4 and a motion sensor 5. Motion sensor 5 can for instance be an acceleration sensor or a simple motion switch.

A loudspeaker 20 is further connected to first control 3 to generate an alarm signal. A third communication means 21 is in addition connected to the control. This third communication means 21 can detect sound and/or light signals of for instance a telephone 22.

Lock 1 further has a portable key 6 comprising a second control 7 and second communication means 8. Via the first and second communication means 4, 8 data can be exchanged between the first and second controls 3,7 in order to thus open ring lock 2 at the correct moment.

Portable key 6 further comprises a loudspeaker 9 for generating an alarm signal, and an electronic memory 10 for registering the different actions, such as opening and closing of ring lock 2.

Portable key 6 can be provided with an operating button whereby the last registered action can be called up and it can be checked whether lock 2 is in closed position.

Figure 2A shows ring lock 2 in more detail and in open position, while figure 2B shows ring lock 2 in closed position.

Ring lock 2 has an annular housing 11 with an opening 12. Arranged in annular housing 11 is a closure 13 in the form of a correspondingly curved rod. This closure 13 can be displaced by operation via handle 14, whereby closure 13 in closed position bridges opening 12 and can thus lock up a part 15, such as a cycle wheel.

Further received in housing 11 is a spring 16 which attempts to pull closure 13 back to the open position. In order to prevent spring 16 pulling closure 13 out of the closed position a groove 17 on which a bolt 18 engages is provided in the closure.

Bolt 18 is operated by an actuator 19, such as for instance an electric motor or an electromagnet. The position of bolt 18 can be detected by a suitable sensor, for instance a switch, the position of closure 13 thereby being known at the same time.

When ring lock 2 is now in closed position, no energy is needed to keep ring lock 2 in this state. As soon as a user takes hold of the cycle with ring lock 2 and thus moves lock 1, this will be registered by motion sensor 5. This will then activate first control 3, which will search for the associated portable key 6 via first communication means 4.

Portable key 6 will make contact with first communication means 4 via second communication means 8 so that first control 4 can communicate with second control 7. It will first be checked, for instance by means of a unique code, whether the correct portable key 6 is indeed in the vicinity of ring lock 2. If this is the case, first control 3 will control actuator 19 so that bolt 18 is pulled from groove 17 and spring 16 can pull closure 13 back to the open position.

If the user parks his/her cycle somewhere again and forgets to manually close ring lock 2 before walking away, communication means 4 and 8 will notice the signal becoming weaker. When a determined threshold value, at which the signal is too weak and portable key 6 is too far removed from ring lock 2, is exceeded, second control 7 will activate loudspeaker 9 and thus warn the user that ring lock 2 is still in the open position.

It is only when ring lock 2 has been brought into closed position, and this has been communicated to second control 7 via communication means 4, 8, that the user can move away with the portable key from ring lock 2 without the alarm going off.

In the case that ring lock 2 is in closed position and portable key 6 is lost, ring lock 2 can still be opened by means of a telephone 22. An application in which a unique code is set is for this purpose installed on telephone 22. This code can be the same as the code in portable key 6. The application will then have telephone 22 generate a sound signal and/or light signal whereby the unique code can be transmitted to third communication means 21, so that control 3 can still operate actuator 19 and ring lock 2 can be opened.

## Claims

1. Lock, particularly a cycle lock, wherein the lock comprises:
- a closure displaceable between an open position and a closed position;
- spring means for urging the closure to the open position;
- a locking for locking the closure in the closed position;
- an electric actuator for operating the locking;
- a first control for controlling the electric actuator, wherein the first control comprises first communication means; and
- a portable key comprising a second control with second communication means for communicating with the first communication means
**characterized in that** the first control comprises a motion sensor for detecting movement and then activating the first communication means.

2. Lock as claimed in claim 1, further comprising a sensor for detecting the position of the closure.

3. Lock as claimed in claim 1 or 2, wherein the second communication means comprise a passive transmitter and wherein the first control comprises an electromagnetic source for activating the passive transmitter, and a receiver.

4. Lock as claimed in any of the foregoing claims, wherein the first and second communication means bring about two-way communication.

5. Lock as claimed in claim 4, wherein the portable key comprises an electronic memory for registering data relating to the two-way communication.

6. Lock as claimed in any of the foregoing claims, further comprising measuring means for measuring the distance between the first control and the second control of the portable key, and alarm means wherein the first and/or the second control activates the alarm means when the distance measured by the measuring means exceeds a threshold value while the closure is in the open position.

7. Lock as claimed in claim 6, wherein the measuring means determine the exceeding of the threshold value on the basis of the signal strength between the first and second communication means.

8. Lock as claimed in claim 6 or 7, further comprising second alarm means which are connected to the first control.

9. Lock as claimed in any of the foregoing claims, wherein the first control comprises third communication means for communicating on the basis of a light signal and/or sound signal.
